# EUROPÄISCHE PATENTSCHRIFT

(11) **EP 3 664 380 B1**
(45) Veröffentlichungstag und Bekanntmachung des Hinweises auf die Patenterteilung: **24.04.2024**
(21) Anmeldenummer: 19214030.9
(22) Anmeldetag: 06.12.2019
(51) Int. Cl.: H04L 12/28

(54) **UPGRADBARES STUFENKONZEPT FÜR BELEUCHTUNGSSYSTEME**
UPGRADABLE STAGE CONCEPT FOR LIGHTING SYSTEMS
CONCEPT D'ÉTAGES POUVANT ÊTRE MIS À NIVEAU POUR SYSTÈMES D'ÉCLAIRAGE

(30) Priorität: 06.12.2018 DE 102018009603; 15.02.2019 DE 102019103893
(43) Veröffentlichungstag der Anmeldung: 10.06.2020
(73) Patentinhaber: Siteco GmbH, 83301 Traunreut (DE)
(72) Erfinder: Bornemann, Lars, 83254 Breitbrunn (DE); König, Christian, 84558 Kirchweihdach (DE)
(74) Vertreter: Schmidt, Steffen

(56) Entgegenhaltungen:
- US-A1- 2002 154 025
- US-A1- 2017 223 811

## Beschreibung

Die vorliegende Erfindung betrifft ein Netzwerk, welches eine Vielzahl von Netzwerkkomponenten umfasst, die an eine Gebäudeinstallation, insbesondere die Beleuchtungstechnik des Gebäudes sowie ggf. weitere Gebäudeinstallationen, wie z.B. Klimaanlage, Jalousien oder dergleichen umfassen. Gebäudeinstallation kann auch Geräte in im gebäudenahen Bereich und im Außenbereich umfassen, z.B. Beleuchtungsanlagen von Zufahrtswegen, elektrische Schranken, etc.

In modernen Bürogebäuden, sowie sogar in Wohngebäuden, werden die Installationen der Gebäudetechnik einschließlich der Beleuchtungstechnik miteinander vernetzt, um eine mehr oder weniger zentrale Steuerung der Geräte zu ermöglichen. Es ist möglich, dass nur wenige Geräte innerhalb eines Raumes vernetzt werden. Es ist aber auch möglich, dass die Gebäudetechnik eines gesamten Gebäudes zentral gesteuert wird.

Ein Nachteil besteht aber darin, dass eine einmal gewählte Installation nicht durch eine höherwertigere Installation mit einer zentralen Steuerung von noch mehr Geräten ersetzt werden kann, ohne die einzelnen Geräte der Gebäudetechnik auszutauschen.

US 2017/223811 A1 offenbart ein Verfahren und ein System zum autonomen Erstellen eines Wiederherstellungspunktes für eine Leuchtensteuerung, um sie nach Bedarf für den ordnungsgemäßen Betrieb wieder herzustellen. Die Leuchtensteuerung arbeitet unter Verwendung einer ersten Betriebssoftware mit einem ersten Software-Bild und empfängt ein zweites Software-Bild einer zweiten Betriebssoftware. Die Systemsteuerung übermittelt das erste Software-Bild an ein erstes Gerät, das über ein Kommunikationsnetzwerk mit der Leuchtensteuerung verbunden ist, installiert die zweite Betriebssoftware und führt einen Selbsttest der Leuchtensteuerung durch. Wenn die Leuchtensteuerung den Selbsttest nicht besteht, fordert die Leuchtensteuerung über das Netzwerk an, dass das erste Gerät das erste Software-Bild über das Netzwerk an die Leuchtensteuerung überträgt, empfängt das erste Software-Bild, installiert die erste Betriebssoftware und kehrt zum Betrieb mit der ersten Betriebssoftware zurück.

Aufgabe der vorliegenden Erfindung ist es, ein Netzwerk für Netzwerkkomponenten einer Gebäudetechnik bereitzustellen, welches flexibel im Hinblick auf nachträglich Änderungen an der Gebäudetechnik ist.

Gelöst wird die Aufgabe durch ein Netzwerk nach Anspruch 1 und ein Verfahren nach Anspruch 13.

Eine Besonderheit des Netzwerkes der vorliegenden Erfindung besteht in der Möglichkeit, das Netzwerk ohne Änderung der Netzwerkkomponenten in verschiedenen Ausbaustufen betreiben zu können. In der ersten Ausbaustufe umfasst das Netzwerk lediglich eine Kopplung der Netzwerkkomponenten innerhalb einzelner Räume eines Gebäudes, eines gebäudenahen Bereichs oder eines Außenbereichs des Gebäudes. Diese Ausbaustufe wird auch als SMART-System bezeichnet. Beispielsweise kann mit einer Benutzerschnittstelle als eine der Netzwerkkomponenten die Beleuchtungsgeräte und die sonstige Gebäudeinstallation innerhalb eines Raumes gesteuert werden. Erfindungsgemäß sind diese Netzwerkkomponenten bereits dafür eingerichtet, ohne eine Änderung in der Hardware auch an ein dem SMART-System übergeordnetes LMS/BMS-System (Lichtmanagementsystem oder Buildingmanagementsystem) angeschlossen zu werden. Die Netzwerkkomponenten in dem SMART-System, welche als Master in dem System betrieben wurde, schalten dann automatisch auf einen Slave-Modus um und die Steuerung erfolgt zentral von dem Master des übergeordneten LMS/BMS-Systems. Dabei können alle Parameter, die bereits in dem SMART-System parametrisiert waren, von dem übergeordneten LMS/BMS-System übernommen werden, ohne dass eine Neuprogrammierung der Netzwerkkomponenten erforderlich ist. In einer dritten Ausbaustufe können wiederum mehrere LMB/BMS-System zentral über eine Cloud gekoppelt werden. Diese ermöglicht, auch mehrere Gebäude, insbesondere Standortübergreifen in einem gemeinsamen Netz zu betreiben, um beispielsweise eine Auswertung der von den Netzwerkkomponenten gelieferten Daten zentral vornehmen zu können sowie ggf. eine zentrale Steuerung aller Netzwerkkomponenten, z.B. ein abgeändertes Zeitprogramm für alle Beleuchtungssysteme der Produktionshallen eines Unternehmens während der Betriebsferien, vornehmen zu können. Die Besonderheit des erfindungsgemäßen Netzwerksystems besteht darin, dass die einzelnen Netzwerkkomponenten, welche das System ausbilden, in jeder der drei Ausbaustufen betrieben werden können. Dadurch ist es nicht erforderlich, bei dem Ausbau des Netzsystems die einzelnen Komponenten austauschen zu müssen.

Gemäß einer bevorzugten Ausführungsform sind die Netzwerkkomponenten ausgewählt aus einer Gruppe, bestehend aus: elektrischen Vorschaltgeräten von Leuchten, insbesondere dimmbare oder schaltbare Varianten davon, Aktuatoren von Gebäudetechnik, Sensoren, Benutzer-Schnittstellen und Gateways. Alle Netzwerkkomponenten können drahtgebunden oder drahtlos angesprochen und vernetzt werden. Damit sind alle wesentlichen Elemente einer Gebäudeinstallation, insbesondere der Beleuchtungsgeräte umfasset.

Erfindungsgemäß sind die Netzwerkkomponenten parametrisierbar und die Parametrisierung betrifft einen oder mehrere der folgenden Parameter: Zeitprogramme, insbesondere nach Tageszeit und/oder nach Kalendertag, Nachlaufzeiten und/oder Alarmfunktionen; Dimm-Level nach einer detektierten An- und Abwesenheit von Personen in einer Umgebung eines Sensors, optional mit einer allmählichen Ein- oder Ausblendung; halbautomatischer oder vorautomatischer Betriebe einer Komponente über eine oder mehrere Benutzerschnittstellen; Verhalten bei einem Versorgungsnetzausfall, bei Netzwiederkehr und/oder bei einem Systemfehler; Typ, Identifikationsnummer und/oder Montageort der Netzwerkkomponente; Aufzeichnung eines Energieverbrauchs einer Netzwerkkomponente und Aufzeichnung von Betriebszeiten und/oder Ausfallen einer Netzwerkkomponente.

Gemäß einer bevorzugten Ausführungsform ist die Parametrisierung in der ersten Ausbaustufe durch eine Benutzerschnittstelle und/oder durch eine Anwendungssoftware, insbesondere auf einem Smart-Device oder PC-Tool, einrichtbar und veränderbar. Dies ermögliche eine besonders einfache erste Installation des Netzwerkes in der ersten Ausbaustufe.

Gemäß einer bevorzugten Ausführungsform ist die Parametrisierung in der ersten Ausbaustufe durch Betätigung einer lokalen Benutzerschnittstelle und/oder über eine Mobilfunkverbindung oder eine Internetanbindung einrichtbar und veränderbar. Bei Nichtvorhandensein einer Mobilfunk- oder Internetverbindung wird das Projektfile manuelle aus der Datenbank auf ein Inbetriebnahmetool (z.B. eine drahtgebundene oder drahtlose Benutzerschnittstelle) gespeichert. Nach der Inbetriebnahme muss der ggf. aktualisierte Anlagenzustand wieder als Projektfile in die Datenbank zurückgespielt werden.

Erfindungsgemäß ist das Netzwerk dafür eingerichtet, die Daten der Parametrisierung beim Übergang von einer Ausbaustufe in die nächsthöhere Ausbaustufe in Netzwerkkomponenten der nächsthöheren Stufe zu übergeben. Dies ermöglicht ein besonders einfaches Updaten des Systems, weil die bereits erfolgte Parametrisierung des einen oder der mehreren Netzwerke in der ersten Ausbaustufe beim Übergang zur nächsthöheren Stufe nicht erneuet programmiert werden muss.

Gemäß einer bevorzugten Ausführungsform stellt die zweite und/oder dritte Ausbaustufe einen Umzugsmanager bereit, welcher dafür eingerichtet ist, Parameterdaten eines Unternetzes, insbesondere eines Netzwerkes in der ersten Ausbaustufe, in ein anderes Unternetz vollständig zu kopieren.

Gemäß einer bevorzugten Ausführungsform sind die Netzkomponenten dazu eingerichtet, einen bauseitigen Verkabelungsfehler, insbesondere die Verwechslung einer Versorgungsleitung mit einer Steuerleitung, zu erkennen und im Fall des Erkennens eines Verkabelungsfehlers in einem geschützten Betriebsmodus umzuschalten, welcher etwaige Beschädigungen der Netzwerkkomponente verhindert. Das Netzwerk ist dadurch verhältnismäßig robust. Bei einer falschen Verkabelung der Installation können etwaige Fehler durch Visualisierung an einer Netzwerkkomponente, auf einer App oder einem PC-Tool abgelesen werden. In der zweiten und/oder dritten Ausbaustufe des Netzwerks kann der Fehler auch an einer zentralen Leitstelle abgelesen werden, um eine Fehleranalyse der falschen Verkabelung vorzunehmen. Das System ist dabei so eingerichtet, dass es zielorientierte Lösungen zur Fehlerbehebung präsentieren kann.

Gemäß einer bevorzugten Ausführungsform ist das Netzwerk in der zweiten und/oder dritten Ausbaustufe dafür eingerichtet, die Betriebszustände der einzelnen Netzwerkkomponenten und/oder den Betriebszustand einer Gruppe von Netzwerkkomponenten an eine zentrale Leitstelle zu übermitteln. Beispielsweise kann eine Aufzeichnung des Energieverbrauchs einer Netzwerkkomponente, einer Aufzeichnung von Betriebszeiten und/oder Ausfällen einer Netzwerkkomponente übermittelt werden. Diese Aufzeichnungen können analysiert werden, beispielsweise wie in der deutschen Patentanmeldung "Analysetool zur Auswertung von Bedarfs- und Aufzeichnungsdaten von Beleuchtungsanlagen" der gleichen Anmelderin vom selben Anmeldetag beschrieben ist.

Gemäß einer bevorzugten Ausführungsform ist das Netzwerk in der zweiten und/oder in der dritten Ausbaustufe dazu eingerichtet, eine visuelle Darstellung des Betriebszustandes der Netzwerkkomponenten und/oder Gruppen von Netzwerkkomponenten an einer zentralen Leistelle anzuzeigen.

Gemäß einer bevorzugten Ausführungsform sind wenigstens einige oder alle Netzwerkkomponenten dazu eingerichtet, den Energieverbrauch der Netzwerkkomponente zu erheben, und in der zweiten und/oder dritten Ausbaustufe ist das Netzwerk dazu eingerichtet, den ermittelten Energieverbrauch der einzelnen Netzwerkkomponenten an eine zentrale Leitstelle weiterzuleiten. Dies ist besonders hilfreich, um den Gesamtenergieverbrauch eines Unternehmens, welches sich über ein oder mehrere Standorte erstreckt, zu optimieren. Es hilft dabei, den Energieverbrauch einzelner Gebäude miteinander zu vergleichen, um beispielsweise auf bauliche Mängel von Gebäuden aufmerksam zu werden und ggf. Sanierungsarbeiten zu planen.

Gemäß einer bevorzugten Ausführungsform weisen einige Netzwerkkomponenten Sensoren auf und das Netzwerk ist dazu eingerichtet, die von den Sensoren erhobenen Daten zur Steuerung von Betriebsgeräten in Netzwerkkomponenten zu verwenden und in der zweiten und/oder dritten Ausbaustufe die Daten an eine zentralen Leitstelle weiterzuleiten.

Gemäß einer bevorzugten Ausführungsform sind wenigstens einige der Netzwerkkomponenten dazu eingerichtet, den Betriebszustand der jeweiligen Netzwerkkomponente zu erfassen, und das Netzwerk in der zweiten und/oder dritten Ausbaustufe ist dazu eingerichtet, die Betriebsdaten der Netzwerkkomponenten an einer zentralen Leitstelle zu empfangen und zur Vorhersage von geeigneten Wartungsarbeiten der Netzwerkkomponenten auszuwerten.

Gemäß einer bevorzugten Ausführungsform sind wenigstens einige der Netzwerkkomponenten dazu eingerichtet, eine Temperatur, eine Feuchtigkeit und/oder eine mechanische Erschütterung zu detektieren und das Netzwerk in der zweiten und/oder dritten Ausbaustufe ist dazu eingerichtet, die ermittelten Temperaturen, Feuchtigkeiten oder mechanischen Erschütterungen an eine zentrale Leitstelle zur weiteren Auswertung weiterzuleiten. Diese Daten sind hilfreich, um eine Analyse von auftretenden Schäden in der Anlage vornehmen zu können. Sie dienen aber auch dazu, eventuelle Regressansprüche gegen den Hersteller der Netzwerkkomponenten abwehren zu können, weil der Hersteller mit den Daten nachweisen kann, dass ggf. Netzwerkgeräte außerhalb deren vorgegebener Spezifikation betrieben worden sind. Weitere Funktionen der Analyse sind in der oben genannten deutschen Patentanmeldung "Analysetool zur Auswertung von Bedarfs- und Aufzeichnungsdaten von Beleuchtungsanlagen" der gleichen Anmelderin vom selben Anmeldetag beschrieben.

Weitere Vorteile und Merkmale der vorliegenden Erfindung werden aus der nachfolgenden Beschreibung einer bevorzugten Ausführungsform deutlich, welche in Verbindung mit den beigefügten Figuren gegeben wird. In den Figuren ist Folgendes dargestellt.
- Figur 1: zeigt schematisch ein Netzwerk der vorliegenden Erfindung in der ersten Ausbaustufe.
- Figur 2: zeigt schematisch das Netzwerk nach Figur 1 mit einer App-Steuerung.
- Figur 3: zeigt schematisch das Netzwerk nach Figur 2 in der zweiten Ausbaustufe.

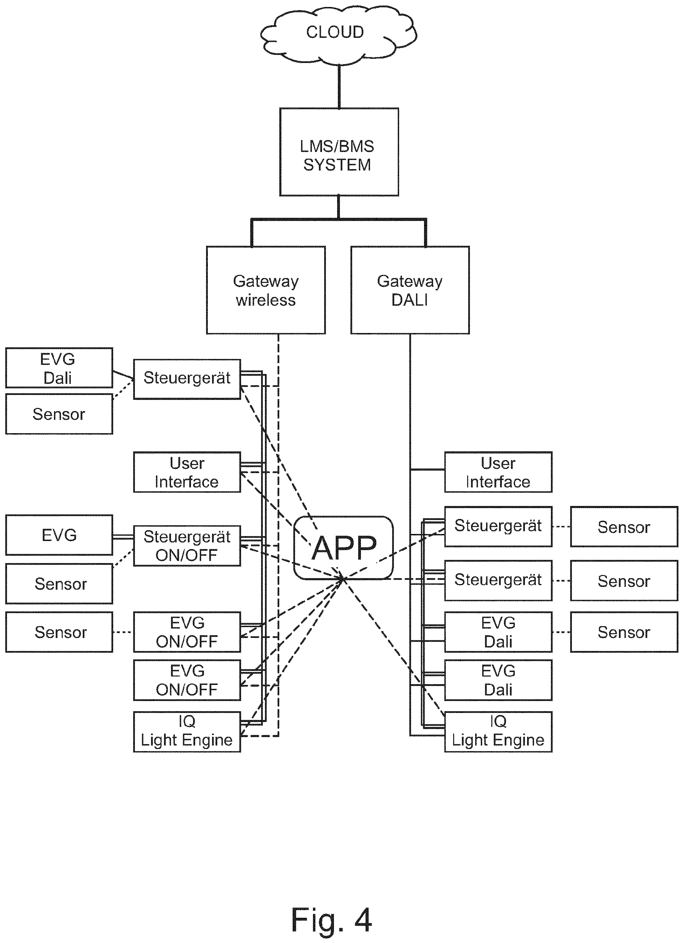

- Figur 4: zeigt schematisch das Netzwerk nach Figur 2 in der dritten Ausbaustufe.
- Figuren 5: bis 12 zeigen schematisch ein Fabrikgelände, dessen Gebäudetechnik gemäß einer Ausführungsform der Erfindung erweitert und saniert wird.

Die Erfindung sieht ein upgradbares Netzwerk für Gebäudetechnik, insbesondere für Beleuchtungstechnik und sonstige Betriebsgeräte der Gebäudetechnik vor. Die Netzwerkkomponenten umfassen Sensoren, Steuergeräte, Light Engines, Benutzerschnittstellen und Inbetriebnahme-Tools. Es besteht die Möglichkeit der beliebigen Kombination der Netzwerkkomponenten, die im Folgenden auch als Systemkomponenten bezeichnet werden. Bei dem Netzwerk wird grundlegend zwischen drei Ausbaustufen unterschieden, welche auch als "SMART", "LMS/BMS" und "Cloud" bezeichnet werden. Ein Upgrade auf die jeweils höherwertige Funktion besteht jederzeit, ohne bereits in einem oder mehreren Gebäuden vorhandene Systemkomponenten tauschen zu müssen.

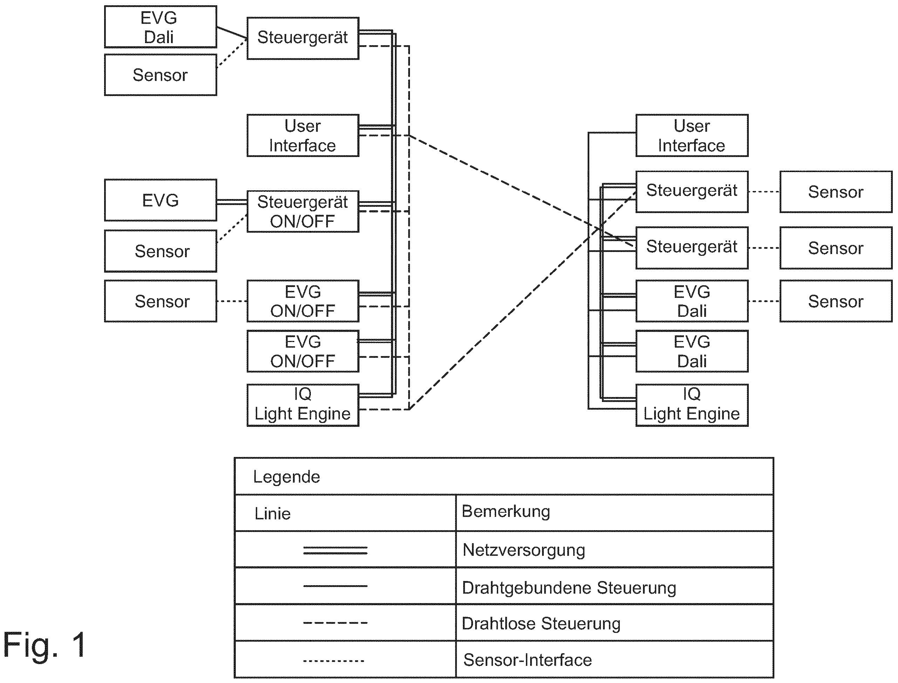

Der Funktionsumfang der Ausbaustufe "SMART" wird als raumbezogene Lösung realisiert. Eine Verbindung zu einem zentralen Steuerungssystem des Gebäudes besteht nicht. Alle Funktionen werden im Raum bereitgestellt. Es können beliebig viele SMART-Systeme parallel in einem Gebäude oder in mehreren Gebäuden aufgebaut werden. Das SMART-System kann als drahtlose oder drahtgebundene Kopplung der Netzwerkkomponenten oder als eine Mischform der beiden aufgebaut werden. Ein Beispiel eines SMART-Systems ist in Figur 1 dargestellt. Verschiedene Netzwerkkomponenten, insbesondere elektronische Vorschaltgeräte, Sensoren, Steuergeräte, Benutzerschnittstellen und sonstige Light Engines sind kombiniert. Alle Geräte sind mit einer Netzversorgung gebunden, wobei Sensoren an entsprechende Netzwerkkomponenten über gesonderte Schnittstellen angebunden sein können. Ferner sind die Systemkomponenten mit einer drahtlosen und einer drahtgebundenen Steuerung verknüpft.

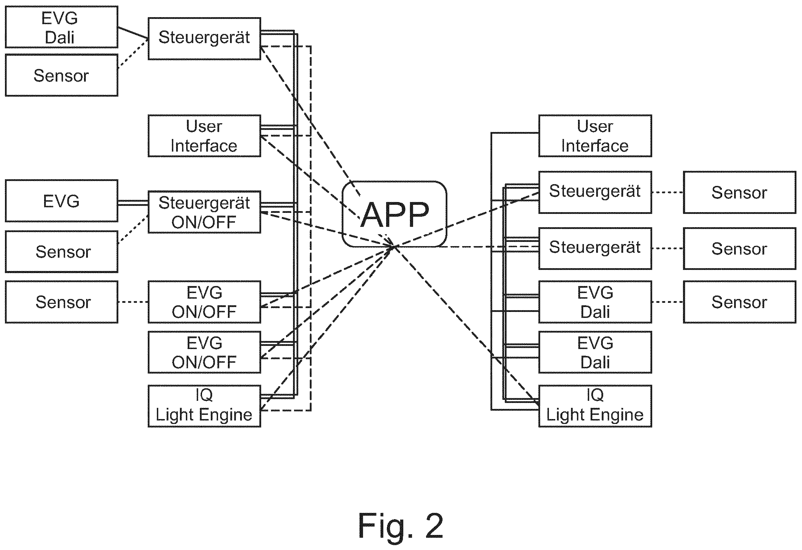

Das SMART-System kann auf individuelle Anforderung parametrisiert werden. Die Parametrisierung aller relevanten Systemeinstellungen erfolgt mittels einer der Benutzerschnittstellen oder automatisch mittels einer geführten App oder PC-Tool. Figur 2 zeigt eine Variante des SMART-Systems, bei welcher eine erhöhte drahtlose Verknüpfung der Systemkomponenten vorgesehen ist, in die mittels einer App bzw. PC-Tool eingegriffen werden kann, um die Komponenten zu parametrisieren. Die Parametrisierung ist lokal oder online möglich. Von einer lokalen Parametrisierung spricht man, wenn vor Ort kein Internet oder Mobilfunknetz zur Verfügung steht. Alle Daten werden auf ein Inbetriebnahme-Tool gespeichert und erst vor Ort bei der Inbetriebnahme auf die Komponenten übertragen. Daher ist eine aktive Verbindung mit dem Internet oder eine Mobilfunknetz bei der Inbetriebnahme nicht erforderlich. Alle relevanten Systemeinstellungen werden zwischengespeichert und bei erneuter Verbindung dem Internet oder einem Mobilfunknetz ggf. automatisch aktualisiert.

Von einer Online-Parametrisierung spricht man, wenn vor Ort eine Internet- oder Mobilfunkverbindung zur Verfügung steht. Alle Daten werden aus dem Internet automatisch auf ein Inbetriebnahme-Tool gespeichert. Während der Inbetriebnahme ist eine aktive Verbindung mit dem Internet/Mobilfunknetz erforderlich. Alle relevanten Systemeinstellungen werden automatisch online gespeichert und ggf. aktualisiert.

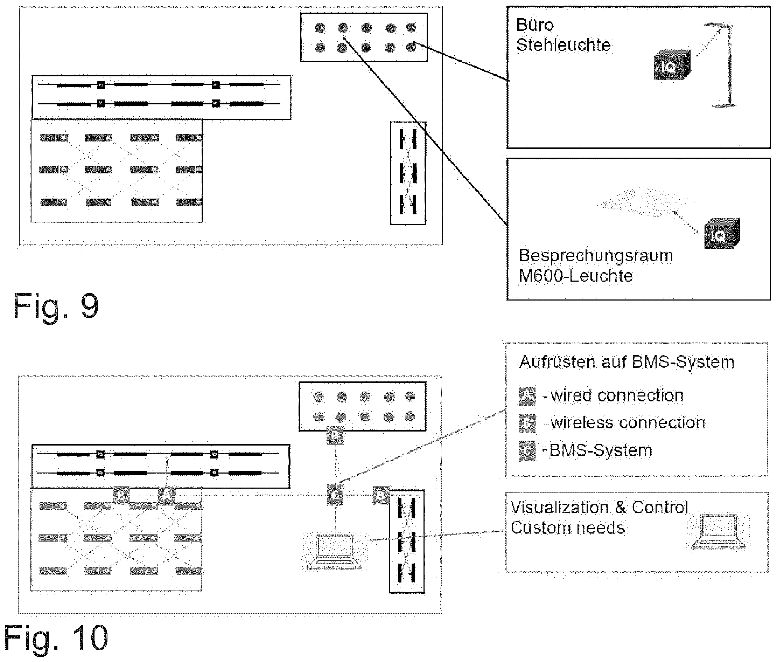

Als Beispiel für ein SMART-System wird ein Büro angeführt (siehe Figur 9).

Hier werden alle Leuchten intelligent über Sensoren gesteuert um Energie einzusparen. Die Deckenleuchten und Sensoren werden drahtgebunden, die Stehleuchte wird drahtlos in der gemeinsame Gruppe "Büro" gesteuert.

Der Nutzer hat jederzeit die Möglichkeit, das Licht individuell auf seine Bedürfnisse hin anzupassen. Es besteht die Möglichkeit, die Beleuchtung im Büro mittels einer Benutzerschnittstelle, APP, Fernbedienung, PC, akustischem Signal, Gesichts-Erkennung, Iris-Scanner oder durch Mimik/Gestik zu steuern.

Die System-Komponenten können auch sofort an ein LMS- oder BMS-System angebunden werden (siehe Figur 10). Besteht die Anforderung das Netzwerk als SMART-System nachträglich an ein übergeordnetes LMS- oder BMS-System anzuschließen ist dies möglich, ohne dass Komponenten getauscht werden müssen. Es ist lediglich eine drahtgebunden oder eine drahtlose Verbindung mittels geeigneten Schnittstellen (Gateways) bauseitig herzustellen. Ist diese Verbindung hergestellt werden alle bei der Inbetriebnahme als SMART-System gespeicherten System-Parametrisierungen automatisch an das übergeordnete Steuerungssystem weitergeleitet und können sofort weiter verwendet werden. Eine aufwändige Neuprogrammierung ist nicht erforderlich. Der laufende Betrieb wird vor Ort nicht gestört oder unterbrochen.

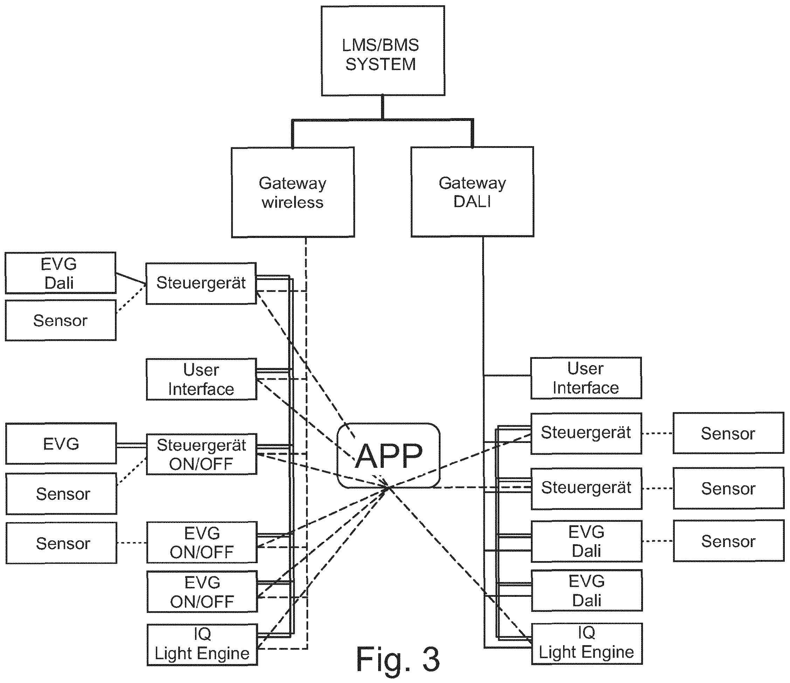

Besteht die Anforderung, das Netzwerk mit BMS-System-Anbindung nachträglich an eine Cloud anzuschließen, ist dies wie in Figur 3 gezeigt möglich, ohne dass Komponenten getauscht werden müssen. Ist diese Verbindung hergestellt werden alle bei der Inbetriebnahme als SMART- oder BMS-System gespeicherten System-Parameter automatisch übernommen und können sofort weiter verwendet werden. Eine aufwändige Neuprogrammierung ist nicht erforderlich. Der laufende Betrieb wird vor Ort nicht gestört oder unterbrochen.

Das Netzwerk mit den verschiedenen Ausbaustufen gemäß der vorliegenden Erfindung bietet daher den Vorteil, den Funktionsumfang genau auf die kundenspezifischen Anforderungen hin anpassen zu können. Ferner besteht die Möglichkeit, das System auch nach einiger Zeit mit weiteren Merkmalen upzudaten, das bedeutet die Systemkomponenten werden an ein zentrales LMS bzw. BMS-System angeschlossen. Sämtliche Netzwerkkomponenten müssen nicht ausgetauscht werden und können weiter verwendet werden. Selbst bei vorher eingestellten System-Parametern können automatisch mit in das LMS bzw. BMS-System übernommen werden.

Alle Netzwerkkomponenten testen sich nach der Erstinstallation automatisch selbst und führen automatisch ein System-Setup durch, um eine störungsfreie Funktion zu gewährleisten. Während des Betriebs kann zyklisch ein Selbsttest durchgeführt werden, um den einwandfreien Betrieb zu gewährleisten. Etwaige Fehler können an der Netzwerkkomponente selbst, an der App, im PC-Tool oder im BMS/LMS-System angezeigt werden. Die analysierten Fehler werden in einer der Zielgruppe verständlichen Art und Weise dargestellt und sollen helfen, Fehler schnell zu beheben. Ein weiterer Vorteil des Systems besteht darin, dass auch bauseitige Verkabelungsfehler, z.B. bei einer Verwechslung der Versorgungsnetzleitung mit einer Steuerleitung (z.B. DALI oder umgekehrt) die Komponenten nicht zerstört werden, sondern in einem Schutzbetrieb verbleiben, bis der Fehler behoben ist. Etwaige Störungen können durch das Netzwerk an eine zentrale Leitstelle angezeigt werden.

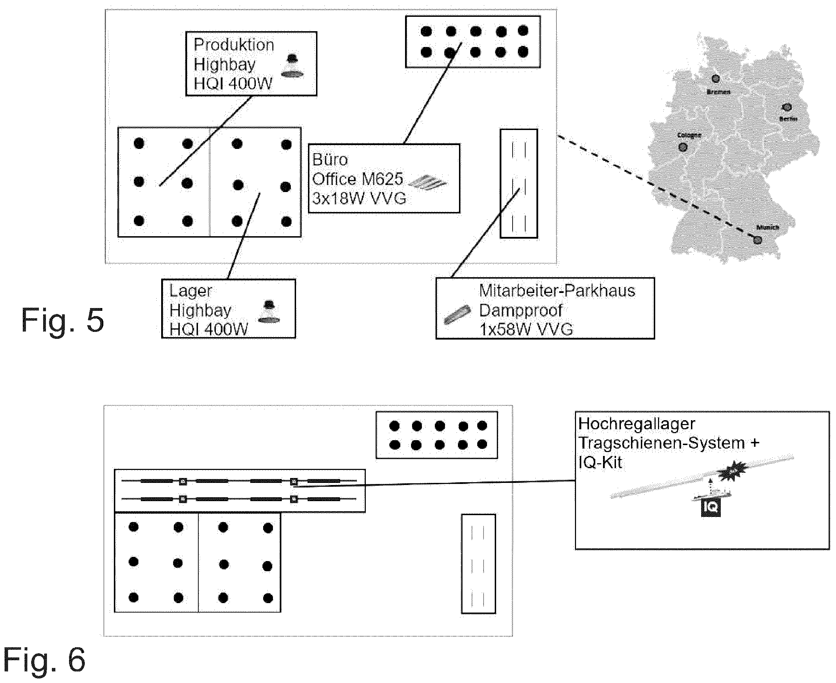

Im Folgenden wird der Aufbau eines Netzwerkes sowie ein schrittweises Updaten des Netzwerkes anhand eines Fabrikgeländes, wie in Figur 5 gezeigt, beschrieben. Die Fabrik liegt in München und besteht aus Produktionsbereich, Hochregallager, Büro und Mitarbeiterparkhaus. Die Beleuchtungsanlage ist veraltet und soll saniert werden. Einige Bereiche werden komplett neu gebaut.

Im Beispiel wird aufgezeigt, wie eine Liegenschaft gemäß Figur 5 schrittweise saniert und Neubauten integriert werden können.

Im ersten Schritt (Fig. 6) wird ein Hochregallager neu gebaut. In die verwendeten Leuchten werden modulare IQ-Kits Netzwerkkomponenten (in den Figuren als "IQ" bezeichnet) werkzeuglos eingebaut. Das bietet die Möglichkeit, dass jede Standard-Leuchte durch modulares und werkzeugloses Aufstecken zu einer Netzwerk-Leuchte upgedatet werden kann. Damit wird Energie durch Bewegungs- und Tageslicht-Erfassung eingespart. Die Beleuchtungsanlage kann jederzeit durch den Nutzer mittels Benutzerschnittstellen manuell angepasst werden. Jede Hochregallager-Gasse ist ein SMART-System mit keiner Anbindung an Nachbar-Systeme oder ein zentrales LMS- oder BMS-System. Alle Netzwerkkomponenten in einer Hochregallager-Gasse sind drahtgebunden miteinander verbunden. Die Leuchten sind entweder dimmbar oder schaltbar ausgeführt. Die Inbetriebnahme funktioniert entweder automatisch oder kann mittels einer App bzw. PC-Tool ausgeführt werden. Der eben beschriebene Bereich funktioniert eigenständig als SMART-System. Es besteht auch die Möglichkeit die Leuchten bewegungsabhängig EIN/AUS zu schalten.

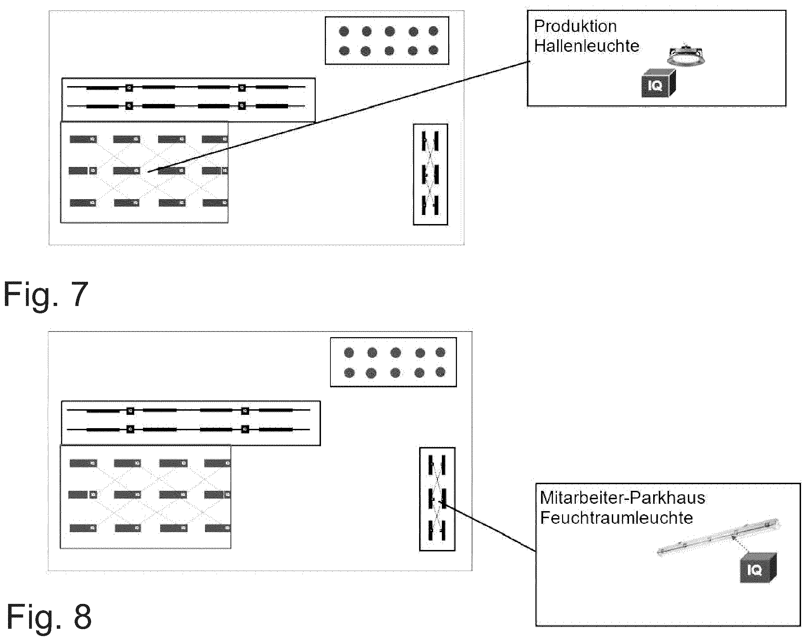

Im zweiten Schritt (Fig. 7) wird die bestehende Produktionshalle saniert. Dazu werden die bestehenden Hallenleuchten durch neue ersetzt. In die verwendeten Leuchten werden modulare IQ-Kits (Netzwerkkomponenten) werkzeuglos eingebaut. Das bietet die Möglichkeit, dass jede Standard-Leuchte durch modulares Aufstecken zu einer Netzwerk-Leuchte upgedatet werden kann. Damit wird Energie durch Bewegungs- und Tageslicht-Erfassung eingespart. Die Beleuchtungsanlage kann jederzeit durch den Nutzer mittels Benutzerschnittstellen manuell angepasst werden. Da bei der Sanierung keine Kabel- und Leitungen gezogen werden können, sind die Leuchten und Benutzerschnittstellen drahtlos miteinander vernetzt. Der eben beschriebene Bereich funktioniert eigenständig als SMART-System. Die Leuchten sind entweder dimmbar oder schaltbar ausgeführt. Die Inbetriebnahme funktioniert entweder automatisch oder kann mittels einer App bzw. PC-Tool ausgeführt werden.

Im dritten Schritt (Fig. 8) wird das bestehende Mitarbeiterparkhaus saniert. Dazu werden die bestehenden Feuchtraumleuchten durch neue ersetzt. In die verwendeten Leuchten werden modulare IQ-Kits werkzeuglos eingebaut. Das bietet die Möglichkeit, dass jede Standard-Leuchte durch modulares Aufstecken zu einer Netzwerk-Leuchte upgedatet werden kann. Damit wird Energie durch Bewegungs- und Tageslicht-Erfassung eingespart. Die Beleuchtungsanlage kann jederzeit durch den Nutzer mittels Benutzerschnittstellen manuell angepasst werden. Da bei der Sanierung keine Kabel und Leitungen gezogen werden können, sind die Leuchten und Benutzerschnittstellen drahtlos miteinander vernetzt. Der eben beschriebene Bereich funktioniert eigenständig als SMART-System. Die Leuchten sind entweder dimmbar oder schaltbar ausgeführt. Die Inbetriebnahme funktioniert entweder automatisch oder kann mittels einer App ausgeführt werden. Für die automische Inbetriebnahme ist eine Grundfunktion definiert, welche bereits in der Produktion in der Netzwerkkomponente gespeichert wird oder erst vor Ort über eine Kopie des Projektfiles aus der Datenbank in die Netzwerkkomponente überspielt wird.

Im vierten Schritt (Fig. 9) wird das bestehende Bürogebäude saniert. Dazu werden die bestehenden Büroleuchten durch neue ersetzt. In die verwendeten Leuchten werden modulare IQ-Kits werkzeuglos eingebaut. Das bietet die Möglichkeit, dass jede Standard-Leuchte durch modulares Aufstecken zu einer Netzwerk-Leuchte upgedatet werden kann. Damit wird Energie durch Bewegungs- und Tageslicht-Erfassung eingespart. Die Beleuchtungsanlage kann jederzeit durch den Nutzer mittels Benutzerschnittstellen manuell angepasst werden. Da bei der Sanierung keine Kabel und Leitungen gezogen werden können, sind die Leuchten und Benutzerschnittstellen drahtlos miteinander vernetzt. Der eben beschriebene Bereich funktioniert eigenständig als SMART-System. Die Inbetriebnahme funktioniert entweder automatisch oder kann mittels einer App bzw. PC-Tool ausgeführt werden. Der Nutzer hat die Möglichkeit die Leuchten über sein Smartphone zu steuern.

In Schritt fünf (Fig. 10) werden alle SMART-Systeme an ein zentrales BMS-System angebunden. Dies wird durch entsprechende Gateways realisiert welche das Bindeglied zwischen Feldebene und BMS-System sind. Aufgrund des offenen Standards sind diese an jedes beliebige BMS-System anbindbar. Wichtig ist, dass sämtliche Netzwerkkomponenten nicht getauscht werden müssen. Sie können unverändert am BMS-System weiter verwendet werden. Es besteht sogar die Möglichkeit, vorher verwendete SMART System-Parametrisierungen automatisch am BMS-System weiter zu verwenden.

In dieser Ausbaustufe besteht die Möglichkeit einer zentralen Steuerung der Leuchten und Beleuchtungsgruppen von allen Leitstellen, z.B. von einem Pförtnerhäuschen. Sämtliche Rückmeldungen werden an die zentrale Leitstelle vermittelt. An der zentralen Leitstelle ist eine Visualisierung des Anlagezustandes möglich. Insbesondere kann der Energieverbrauch jeder einzelnen Leuchte bzw. einer Beleuchtungsgruppe dargestellt werden. Hierzu werden alle notwendigen Daten (Analysedaten) an den Netzwerkkomponenten erhoben und an das zentrale BMS-System zur Weiterleitung geleitet. Anhand der Betriebsdaten können auch Systemfehler an einem zentralen Leitrechner des BMS-Systems weitergeleitet werden, um entsprechende Wartungsarbeiten zu koordinieren. Weitere Einzelheiten zu den Analysedaten und den Funktionen zu ihrer Auswertung sind in der deutschen Patentanmeldung "Analysetool zur Auswertung von Bedarfs- und Aufzeichnungsdaten von Beleuchtungsanlagen" der gleichen Anmelderin vom selben Anmeldetag beschrieben.

Ferner können über die Sensorik auch Bewegungen, Beleuchtungszustände, Temperaturen und Vibrationen für das Betriebsgelände erhoben werden, wie ebenfalls in der oben genannten deutschen Patentanmeldung beschrieben.

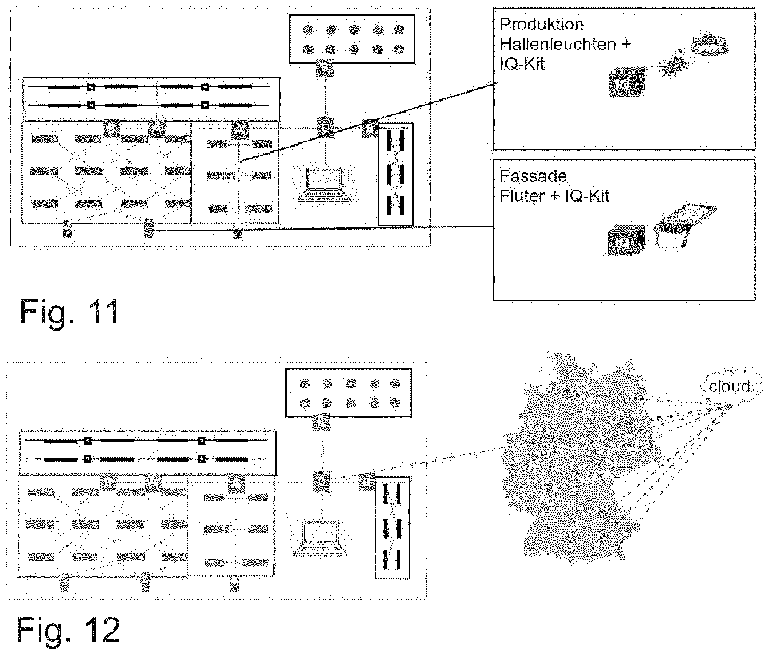

Im sechsten Schritt (Fig. 11) wird die Produktionshalle durch einen Neubau erweitert.

Im Innenbereich werden Highbay-Leuchten montiert. An der Fassade Fluter. In bzw. an die verwendeten Leuchten werden modulare IQ-Kits werkzeuglos eingebaut Das bietet die Möglichkeit, dass jede Standard-Leuchte durch modulares Aufstecken zu einer Leuchte upgedatet werden kann. Damit wird Energie durch Bewegungs- und Tageslicht-Erfassung eingespart. Die Beleuchtungsanlage kann jederzeit durch den Nutzer mittels Benutzerschnittstellen manuell angepasst werden. Dazu werden alle Komponenten (Leuchte, Sensor, Aktor, Benutzerschnittstelle, Gateway) im/am Neubau drahtgebunden miteinander verbunden.

Die neuen Fluter an der bestehenden Produktionshalle (Fassade) können nur drahtlos angesteuert werden, da Steuerleitungen nicht vorhanden sind und auch nicht nachgezogen werden können. Sie werden daher auch mit modularen Netzwerkkomponenten kombiniert, welche drahtlos über die in Schritt 2 (Figur 7) sanierten Leuchten wird sofort an das übergeordnete BMS-System angebunden.

In Schritt sieben (Fig. 12) werden mehrere Standorte an eine Cloud angebunden, um diese z.B. miteinander vergleichen, warten oder steuern zu können. Dies wird durch das entsprechende BMS-System realisiert. Aufgrund des offenen Standards sind diese an jedes beliebige BMS-System anbindbar. Wichtig ist, dass sämtliche Netzwerkkomponenten nicht getauscht werden müssen. Sie können unverändert am BMS-System weiter verwendet werden. Es besteht sogar die Möglichkeit, vorher verwendete SMART System-Parametrisierungen automatisch am BMS-System weiter zu verwenden.

In dieser Ausbaustufe ist eine zentrale Steuerung einzelner Leuchten/Beleuchtungsgruppen von Leitstellen oder Pförtnerhäuschen möglich. Diese Anzeigen können auch zentral von verschiedenen Standorten über ein Cloud abgerufen werden. Beispielsweise ist es möglich, dass die Daten von einem Hersteller erfasst und ausgewertet werden, um den Betriebszustand des Systems von der Ferne zu überwachen. Dadurch ist eine standortübergreifende Visualisierung der Betriebszustände der Netzwerkkomponenten möglich. Standortübergreifende Wartungsarbeiten sowie eine Auswertung des Energieverbrauchs ist möglich. Ferner können besondere Abweichungen der Temperatur oder bei mechanischen Erschütterungen aufgenommen werden, um beispielsweise auf Fehlfunktionen einzelner Geräte oder ein wahrscheinliches Ausfallen einzelner Geräte in besonders belasteter und dafür nicht geeigneter Umgebung analysiert zu werden.

Mögliche Anwendung finden das Verfahren, das Computerprogramm und das Netzwerk der Erfindung in vielen Bereichen. Die Netzwerkkomponenten lassen sich an vielen Orten verbauen, z.B. an oder in einer anderen Komponente einer Gebäudeinstallation, in einer Abhängdecke, einer Betondecke, einer Leuchtbauwand, im Erdreich oder Beton. Als Gebäude in dieser Anmeldung werden jede Form von Bauwerken bezeichnet, einschließlich Wohn- und Bürohäusern, Produktionshallen sowie Straßen und Wege. Der Einsatzbereich kann die Sanierung von Bestandsanlagen oder den Neubau betreffen. Die Komponenten können innerhalb der Gebäude oder im Außenbereich der Gebäude verbaut werden.

## Patentansprüche

1. Netzwerk aus einer Vielzahl von Netzwerkkomponenten, wobei wenigstens einige der Netzwerkkomponenten Geräte einer Gebäudeinstallation, insbesondere Beleuchtungsgeräte umfassen, wobei die Netzwerkkomponenten mit einem elektrischen Versorgungsnetz und einer drahtgebundenen und/oder drahtlosen Steuerung verbunden sind, **dadurch gekennzeichnet, dass**
das Netzwerk in drei verschiedenen Ausbaustufen betreibbar ist, wobei die erste Ausbaustufe eine Vernetzung der Netzwerkkomponenten nur innerhalb eines Raumes mit der drahtgebundenen und/oder drahtlosen Steuerung umfasst,
die zweite Ausbaustufe eine Kopplung mehrerer Netzwerke der ersten Ausbaustufe an ein Lichtmanagementsystem oder Buildingmanagementsystem, LMS/BMS-System, umfasst, und die dritte Ausbaustufe eine Kopplung mehrerer LMS/BMS-Systeme der zweiten Ausbaustufe in einer Cloud umfasst, wobei jede der drei Ausbaustufen eigenständig funktionsfähig ist und der Übergang zur nächsthöheren Ausbaustufe ohne Änderung der Netzwerkkomponenten der niedrigeren Ausbaustufe erfolgen kann,
wobei die Netzwerkkomponenten parametrisierbar sind und die Parametrisierung einen oder mehrere der folgenden Parameter betrifft:
Zeitprogramme, insbesondere nach Tageszeit und/oder nach Kalendertag, Nachlaufzeiten und/oder Alarmfunktionen;
Dimm-Level nach einer detektierten An- und Abwesenheit von Personen in einer Umgebung eines Sensors, optional mit einer allmählichen Ein- oder Ausblendung;
halbautomatischer oder vorautomatischer Betriebe einer Komponente über eine oder mehrere Benutzerschnittstellen;
Verhalten bei einem Versorgungsnetzausfall, bei Netzwiederkehr und/oder bei einem Systemfehler;
Typ, Identifikationsnummer und/oder Montageort der Netzwerkkomponente;
Aufzeichnung eines Energieverbrauchs einer Netzwerkkomponente;
Aufzeichnung von Betriebszeiten und/oder Ausfallen einer Netzwerkkomponente, und
wobei das Netzwerk dafür eingerichtet ist, die Daten der Parametrisierung beim Übergang von einer Ausbaustufe in die nächsthöhere Ausbaustufe in Netzwerkkomponenten der nächsthöheren Stufe zu übergeben.

2. Netzwerk nach Anspruch 1, wobei die Netzwerkkomponenten ausgewählt sind aus einer Gruppe, bestehend aus:
Elektrische Vorschaltgeräte von Leuchten, insbesondere mit DALI-Ansteuerung,
Aktuatoren von Gebäudetechnik,
Sensoren,
Benutzer-Schnittstellen und
Gateways.

3. Netzwerk nach Anspruch 1 oder 2, wobei die Parametrisierung in der ersten Ausbaustufe durch eine drahtgebundene Benutzerschnittstelle und/oder durch eine Anwendungssoftware, insbesondere auf einem Smartdevice, einrichtbar und veränderbar ist.

4. Netzwerk nach einem der vorhergehenden Ansprüche, wobei die Parametrisierung in der ersten Ausbaustufe durch Betätigung einer lokalen Benutzerschnittstelle und/oder über eine Mobilfunkverbindung oder eine Internetanbindung einrichtbar und veränderbar ist.

5. Netzwerk nach einem der vorhergehenden Ansprüche, wobei die zweite und/oder dritte Ausbaustufe einen Umzugsmanager bereitstellt, welcher dafür eingerichtet ist, Parameterdaten eines Unternetzes, insbesondere eines Netzwerkes in der ersten Ausbaustufe, in ein anderes Unternetz vollständig zu kopieren.

6. Netzwerk nach einem der vorhergehenden Ansprüche, wobei die Netzkomponenten dazu eingerichtet sind, einen bauseitigen Verkabelungsfehler, insbesondere die Verwechslung einer Versorgungsleitung mit einer Steuerleitung, zu erkennen und im Fall des Erkennens eines Verkabelungsfehlers in einem geschützten Betriebsmodus umzuschalten, welcher etwaige Beschädigungen der Netzwerkkomponente verhindert.

7. Netzwerk nach einem der vorhergehenden Ansprüche, wobei das Netzwerk in der dritten Ausbaustufe dafür eingerichtet ist, die Betriebszustände der einzelnen Netzwerkkomponenten und/oder den Betriebszustand einer Gruppe von Netzwerkkomponenten an eine zentrale Leitstelle zu übermitteln.

8. Netzwerk nach einem der vorhergehenden Ansprüche, wobei das Netzwerk in der zweiten und/oder in der dritten Ausbaustufe dazu eingerichtet ist, eine visuelle Darstellung des Betriebszustandes der Netzwerkkomponenten und/oder Gruppen von Netzwerkkomponenten an einer zentralen Leistelle anzuzeigen.

9. Netzwerk nach einem der vorhergehenden Ansprüche, wobei wenigstens einige oder alle Netzwerkkomponenten dazu eingerichtet sind, den Energieverbrauch der Netzwerkkomponente zu erheben und in der zweiten und/oder dritten Ausbaustufe das Netzwerk dazu eingerichtet ist, den ermittelten Energieverbrauch der einzelnen Netzwerkkomponenten an eine zentrale Leitstelle weiterzuleiten.

10. Netzwerk nach einem der vorhergehenden Ansprüche, wobei einige Netzwerkkomponenten Sensoren aufweisen und das Netzwerk dazu eingerichtet ist, die von den Sensoren erhobenen Daten zur Steuerung von Betriebsgeräten in Netzwerkkomponenten zu verwenden und in der zweiten und/oder dritten Ausbaustufe die Daten an eine zentrale Leitstelle weiterzuleiten.

11. Netzwerk nach einem der vorhergehenden Ansprüche, wobei wenigstens einige der Netzwerkkomponenten dazu eingerichtet sind, den Betriebszustand der jeweiligen Netzwerkkomponente zu erfassen, und das Netzwerk in der zweiten und/oder dritten Ausbaustufe dazu eingerichtet ist, die Betriebsdaten der Netzwerkkomponenten an einer zentralen Leitstelle zu empfangen und zur Vorhersage von geeigneten Wartungsarbeiten der Netzwerkkomponenten auszuwerten.

12. Netzwerk nach einem der vorhergehenden Ansprüche, wobei wenigstens einige der Netzwerkkomponenten dazu eingerichtet sind, eine Temperatur, eine Feuchtigkeit und/oder eine mechanische Erschütterung zu detektieren und das Netzwerk in der zweiten und/oder dritten Ausbaustufe dazu eingerichtet ist, die ermittelten Temperaturen, Feuchtigkeiten oder mechanischen Erschütterungen an eine zentrale Leitstelle zur weiteren Auswertung weiterzuleiten.

13. Verfahren zum Installieren eines Netzwerkes nach einem der vorhergehenden Ansprüche, wobei das Verfahren folgende Schritte umfasst:
Aufbau des Netzwerks in einem Gebäude nach der ersten Ausbaustufe und erst zeitlich danach eine Erweiterung des Netzwerkes auf die zweite oder dritte Ausbaustufe in dem Gebäude oder in noch weiteren Gebäuden.

## Claims

1. Network of a plurality of network components, wherein at least some of the network components comprise devices of a building installation, in particular lighting devices, wherein the network components are connected to an electrical supply network and a wired and/or wireless controller,
the network is operable in three different expansion stages, wherein the first expansion stage comprises a networking of the network components only within a room with the wired and/or wireless controller,
the second expansion stage comprises a coupling of a plurality of networks of the first expansion stage to a light management system or building management system, LMS/BMS system, and
the third expansion stage comprises a coupling of a plurality of LMS/BMS systems of the second expansion stage in a cloud,
wherein each of the three expansion stages is independently operable and the transition to the next higher expansion stage can take place without changing the network components of the lower expansion stage,
wherein the network components are parameterizable and the parameterization relates to one or more of the following parameters:
time programs, in particular according to time of day and/or according to calendar day, follow-up times and/or alarm functions;
dimming level after a detected presence and absence of persons in an environment of a sensor, optionally with a gradual fade-in or fade-out;
semi-automatic or pre-automatic operation of a component via one or more user interfaces;
behaviour in the event of a supply network failure, in the event of a network return and/or in the event of a system fault;
type, identification number and/or installation location of the network component;
recording an energy consumption of a network component;
recording operating times and/or failures of a network component, and
wherein the network is adapted to transfer the data of the parameterization in the transition from one expansion stage to the next higher expansion stage in network components of the next higher stage.

2. The network according to claim 1, wherein the network components are selected from a group consisting of:
Electrical ballasts of luminaires, in particular with DALI control,
actuators of building technology,
sensors,
user interfaces, and
gateways.

3. The network according to claim 1 or 2, wherein the parameterization in the first expansion stage is adaptable and changeable by a wired user interface and/or by an application software, in particular on a smart device.

4. The network according to one of the preceding claims, wherein the parameterization in the first expansion stage is adaptable and changeable by operating a local user interface and/or via a mobile radio connection or an Internet connection.

5. The network according to one of the preceding claims, wherein the second and/or third expansion stage provides a relocation manager which is adapted to completely copy parameter data of a subnetwork, in particular of a network in the first expansion stage, into another subnetwork.

6. The network according to one of the preceding claims, wherein the network components are adapted to detect a building-side cabling fault, in particular the confusion of a supply line with a control line, and, in the case of the detection of a cabling fault, to switch to a protected operating mode which prevents any damage to the network component.

7. The network according to one of the preceding claims, wherein the network in the third expansion stage is adapted to transmit the operating states of the individual network components and/or the operating state of a group of network components to a central control center.

8. The network according to one of the preceding claims, wherein the network in the second and/or in the third expansion stage is adapted to display a visual representation of the operating state of the network components and/or groups of network components at a central control center.

9. The network according to one of the preceding claims, wherein at least some or all network components are adapted to collect the energy consumption of the network component and, in the second and/or third expansion stage, the network is adapted to forward the determined energy consumption of the individual network components to a central control center.

10. The network according to one of the preceding claims, wherein some network components comprise sensors and the network is adapted to use the data collected by the sensors for controlling operating devices in network components and, in the second and/or third expansion stage, to forward the data to a central control center.

11. The network according to one of the preceding claims, wherein at least some of the network components are adapted to detect the operating state of the respective network component and the network in the second and/or third expansion stage is adapted to receive the operating data of the network components at a central control center and to evaluate them for predicting suitable maintenance work of the network components.

12. The network according to one of the preceding claims, wherein at least some of the network components are adapted to detect a temperature, a humidity and/or a mechanical shock and the network in the second and/or third expansion stage is adapted to forward the determined temperatures, humidities or mechanical shocks to a central control center for further evaluation.

13. A method for installing a network according to one of the preceding claims, wherein the method comprises the following steps:
construction of the network in a building after the first expansion stage and only subsequently an expansion of the network to the second or third expansion stage in the building or in still further buildings.

## Revendications

1. Réseau constitué d'une pluralité de composants de réseau, dans lequel au moins certains des composants du réseau comprennent des appareils d'une installation de bâtiment, plus particulièrement des appareils d'éclairage, dans lequel les composants du réseau sont reliés avec un réseau d'alimentation électrique et une commande filaire et/ou sans fil, **caractérisé en ce que**
le réseau peut fonctionner en trois niveaux d'extension, dans lequel le premier niveau d'extension comprend une mise en réseau des composants du réseau uniquement à l'intérieur d'une pièce avec la commande filaire et/ou sans fil,
le deuxième niveau d'extension comprend un couplage de plusieurs réseaux du premier niveau d'extension à un système de gestion de la lumière ou à un système de gestion de bâtiment, système LMS/BMS et
le troisième niveau d'extension comprend un couplage de plusieurs systèmes LMS/BMS du deuxième niveau d'extension dans un cloud,
dans lequel chacun des trois niveaux d'extension peut fonctionner de manière autonome et la transition vers le niveau d'extension supérieur peut être effectuée sans modifier les composants du réseau du niveau d'extension inférieur,
dans lequel les composants du réseau sont paramétrables et la paramétrisation concerne un ou plusieurs des paramètres suivants :
programmes temporels, plus particulièrement selon l'heure de la journée et/ou selon le jour de l'année, les délais de temporisation et/ou les fonctions d'alarme ;
le niveau de gradation selon la détection d'une présence et d'une absence de personnes dans un environnement d'un capteur, en option avec une surbrillance/masquage progressive ;
modes semi-automatiques ou pré-automatiques d'un composant par l'intermédiaire d'une ou plusieurs interfaces utilisateurs ;
comportement lors d'une panne du réseau d'alimentation, lors d'un retour du réseau et/ou lors d'une erreur système ;
type, numéro d'identification et/ou lieu de montage des composants du réseau ;
enregistrement d'une consommation d'énergie d'un composant du réseau ;
enregistrement de temps de fonctionnement et/ou des pannes d'un composant du réseau et
dans lequel le réseau est conçu pour transférer les données de la paramétrisation lors de la transition d'un niveau d'extension au niveau d'extension supérieur dans les composants du réseau du niveau d'extension supérieur.

2. Réseau selon la revendication 1, dans lequel les composants du réseau sont sélectionnés dans un groupe constitué de :
ballasts électriques de luminaires, plus particulièrement avec une commande DALI,
actionneurs de domotique,
capteurs,
interfaces utilisateurs et
passerelles.

3. Réseau selon la revendication 1 ou 2, dans lequel la paramétrisation dans le premier niveau d'extension peut être configurée et modifiée à l'aide d'une interface utilisateur filaire et/ou à l'aide d'une application, plus particulièrement sur un SmartDevice.

4. Réseau selon l'une des revendications précédentes, dans lequel la paramétrisation dans le premier niveau d'extension peut être configurée et modifiée par l'actionnement d'une interface utilisateur locale et/ou par l'intermédiaire d'une liaison de téléphonie mobile ou d'une connexion Internet.

5. Réseau selon l'une des revendications précédentes, dans lequel le deuxième et/ou troisième niveau d'extension met à disposition un gestionnaire de déplacement qui est conçu pour copier intégralement les données des paramètres d'un sous-réseau, plus particulièrement d'un réseau dans le premier niveau d'extension, vers un autre sous-réseau.

6. Réseau selon l'une des revendications précédentes, dans lequel les composants du réseau sont conçus pour détecter une erreur de câblage côté bâtiment, plus particulièrement la confusion d'une ligne d'alimentation avec une ligne de commande, et, dans le cas d'une détection d'une erreur de câblage, pour passer dans un mode de fonctionnement protégé qui empêche d'éventuels endommagements des composants du réseau.

7. Réseau selon l'une des revendications précédentes, dans lequel le réseau dans le troisième niveau d'extension est conçu pour transmettre les états de fonctionnement des différents composants du réseau et/ou l'état de fonctionnement d'un groupe de composants de réseau à un poste de commande central.

8. Réseau selon l'une des revendications précédentes, dans lequel le réseau dans le deuxième et/ou le troisième niveau d'extension est conçu pour afficher une représentation visuelle de l'état de fonctionnement des composants du réseau et/ou des groupes de composants du réseau à un poste de commande central.

9. Réseau selon l'une des revendications précédentes, dans lequel certains ou tous les composants du réseau sont conçus pour relever la consommation d'énergie des composants du réseau et, dans le deuxième et/ou le troisième niveau d'extension, le réseau est conçu pour transmettre la consommation d'énergie déterminée des différents composants du réseau à un poste de commande central.

10. Réseau selon l'une des revendications précédentes, dans lequel certains composants du réseau comprennent des capteurs et le réseau est conçu pour utiliser les données relevées par les capteurs pour contrôler des appareils dans les composants du réseau et, dans le deuxième et/ou le troisième niveau d'extension, pour transmettre les données à un poste de commande central.

11. Réseau selon l'une des revendications précédentes, dans lequel au moins certains composants du réseau sont conçus pour détecter l'état de fonctionnement du composant de réseau correspondant et le réseau dans le deuxième et/ou le troisième niveau d'extension est conçu pour recevoir les données de fonctionnement des composants du réseau dans un poste de commande central et pour les analyser afin de prédire des travaux de maintenance appropriés pour les composants du réseau.

12. Réseau selon l'une des revendications précédentes, dans lequel au moins certains composants du réseau sont conçus pour détecter une température, une humidité et/ou une secousse mécanique et le réseau ans le deuxième et/ou le troisième niveau d'extension est conçu pour transmettre les températures, humidités ou secousse mécaniques déterminées à un poste de commande central pour une analyse supplémentaire.

13. Procédé pour l'installation d'un réseau selon l'une des revendications précédentes, dans lequel le procédé comprend les étapes suivantes :
construction du réseau dans un bâtiment selon le premier niveau d'extension et, seulement après, extension du réseau vers le deuxième ou le troisième niveau d'extension dans le bâtiment ou dans d'autres bâtiments.
